# FASCICULE DE BREVET EUROPEEN

(11) **EP 2 609 129 B1**
(45) Date de publication et mention de la délivrance du brevet: **20.05.2020**
(21) Numéro de dépôt: 11761672.2
(22) Date de dépôt: 26.08.2011
(51) Int. Cl.: C08G 14/06, C09J 161/34, C03C 25/34, C08K 5/053, C08K 5/21, F16L 59/00

(54) **RESINE PHENOLIQUE, PROCEDE DE PREPARATION, COMPOSITION D'ENCOLLAGE POUR FIBRES MINERALES ET PRODUIT RESULTANT.**
PHENOLHARZ, HERSTELLUNGSVERFAHREN DAFÜR, SCHLICHTUNGSZUSAMMENSETZUNG FÜR MINERALFASERN UND AUF DIESE WEISE GEWONNENES PRODUKT
PHENOLIC RESIN, METHOD FOR PREPARING SAME, SIZING COMPOSITION FOR MINERAL FIBERS AND RESULTING PRODUCT

(30) Priorité: 27.08.2010 FR 1056803
(43) Date de publication de la demande: 03.07.2013
(73) Titulaire: Saint-Gobain Isover, 92400 Courbevoie (FR)
(72) Inventeur: RONCUZZI, Claudio, F-75010 Paris (FR); DOUCE, Jérôme, 69003 LYON (FR); ROUSSELET, Guillaume, 60600 Etouy (FR); MALLIER, Jean-Louis, 60290 Laigneville (FR)
(74) Mandataire: Saint-Gobain Recherche
(86) Numéro de dépôt international: PCT/FR2011/051969
(87) Numéro de publication internationale: WO 2012/025699

(56) Documents cités:
- EP-A2- 0 480 778
- WO-A1-2008/043960
- WO-A2-2008/005729
- US-A- 5 705 537
- US-B1- 6 362 275

## Description

L'invention se rapporte à une résine phénolique destinée à entrer dans la constitution d'une composition d'encollage pour fibres minérales. Cette résine est obtenue par condensation de phénol, de formaldéhyde et de glycine en présence d'un catalyseur basique, et elle se caractérise par un faible taux de formaldéhyde libre et une excellente stabilité.

L'invention se rapporte également à un procédé de préparation de cette résine, la composition d'encollage des fibres minérales contenant ladite résine et les produits isolants qui en résultent.

Les produits d'isolation à base de fibres minérales peuvent être formés à partir de fibres obtenues par différents procédés, par exemple selon la technique connue du fibrage centrifuge interne ou externe. La technique par centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

Pour assurer l'assemblage des fibres entre elles et permettre à la nappe d'avoir de la cohésion, on projette sur les fibres, à la sortie du dispositif centrifuge, une composition d'encollage qui contient une résine thermodurcissable. La nappe de fibres revêtues de la composition d'encollage est soumise à un traitement thermique (à une température généralement supérieure à 100°C) afin d'effectuer la polycondensation de la résine et obtenir un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage se compose de la résine (qui se présente en général sous la forme d'une solution aqueuse) et d'additifs éventuels tels qu'urée, silanes, huiles minérales, ammoniaque et sulfate d'ammonium, et d'eau. L'eau a pour rôle d'ajuster les propriétés de la composition d'encollage pour lui permettre d'être appliquée aisément sur les fibres - le plus souvent par pulvérisation - et de refroidir les fibres. Eventuellement de l'eau supplémentaire peut être pulvérisée sur les fibres par l'intermédiaire d'un dispositif séparé.

Les propriétés de la composition d'encollage dépendent en grande partie des caractéristiques de la résine. Du point de vue de l'application, il est nécessaire que la composition d'encollage présente une bonne aptitude à la pulvérisation et qu'elle puisse se déposer à la surface des fibres afin de les lier au niveau des points de jonction. L'aptitude à la pulvérisation de la composition d'encollage est directement liée à la capacité que possède la résine à pouvoir être diluée dans une grande quantité d'eau et à rester stable dans le temps.

On caractérise l'aptitude à la dilution par la « diluabilité » que l'on définit comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000 %, à 20°C. Une diluabilité égale ou supérieure à 2000 %, à 20°C, est qualifiée de « diluabilité infinie ».

La résine doit encore être stable pendant un laps de temps donné avant d'être utilisée pour former la composition d'encollage, laquelle composition est généralement préparée au moment de l'emploi en mélangeant la résine et les additifs mentionnés précédemment, et éventuellement en rajoutant de l'eau. Notamment, la résine doit être stable pendant au moins 8 jours à une température de l'ordre de 12 à 18°C.

La résine apte à être utilisée dans une composition d'encollage pulvérisable doit présenter une diluabilité à l'eau supérieure ou égale à 1000 %, à 20°C, pendant au moins 8 jours, de préférence supérieure ou égale à 2000 %.

Sur un plan réglementaire, il est nécessaire que la résine soit considérée comme non polluante, c'est-à-dire qu'elle contienne -et qu'elle génère lors de l'étape d'encollage ou ultérieurement- le moins possible de composés considérés comme pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont très solubles dans l'eau, possèdent une bonne affinité pour les fibres minérales, notamment en verre, et sont relativement peu coûteuses.

Ces résines sont obtenues par condensation de phénol et de formaldéhyde, en présence d'un catalyseur basique, dans un rapport molaire formaldéhyde/phénol généralement supérieur à 1 de manière à favoriser la réaction entre le phénol et le formaldéhyde et à diminuer le taux de phénol résiduel dans la résine. La teneur résiduelle en formaldéhyde et en phénol dans la résine demeure élevée.

Pour réduire la quantité de formaldéhyde résiduel, il est connu d'ajouter dans la résine une quantité suffisante d'urée qui réagit avec le formaldéhyde libre en formant des condensats urée-formaldéhyde (voir EP 0 148 050 A1). La résine obtenue renferme des condensats de phénol-formaldéhyde et d'urée-formaldéhyde, présente un taux de formaldéhyde libre et de phénol libre, exprimé en poids total de liquide, inférieur ou égal à 3 % et 0,5 %, respectivement, et a une diluabilité à l'eau au moins égale à 1000 %.

Si la quantité de phénol résiduel est acceptable, en revanche la quantité de formaldéhyde résiduel est trop élevée pour satisfaire les contraintes réglementaires actuelles.

Par ailleurs, il a été constaté que la résine n'est pas stable dans les conditions qui sont appliquées lors du traitement thermique des fibres encollées en vue d'obtenir la réticulation de la résine pour former les produits isolants finals. Ainsi, dans l'étuve où est pratiqué ce traitement, les condensats urée-formaldéhyde sont dégradés et libèrent du formaldéhyde qui augmente les émissions de gaz indésirables dans l'atmosphère. Du formaldéhyde peut aussi être libéré à partir du produit final, lors de son utilisation en tant qu'isolant thermique et/ou acoustique.

Dans EP 0 480 778 A1, il a été proposé de substituer une partie de l'urée par une amine qui réagit avec le phénol et le formaldéhyde libres selon la réaction de Mannich pour former un produit de condensation ayant une stabilité thermique améliorée. Le taux de phénol et de formaldéhyde libres de cette résine est inférieur ou égal à 0,20 % et inférieur ou égal à 3 %, respectivement.

Dans WO 2008/005729 A2, il est décrit un procédé pour diminuer la quantité de formaldéhyde émis par un produit d'isolation à base d'une résine contenant du formaldéhyde. Ce procédé consiste à appliquer sur le produit d'isolation soit un revêtement sous la forme d'une feuille qui est revêtue ou imprégnée d'un agent aqueux apte à piéger le formaldéhyde, soit à inclure le produit d'isolation dans une enceinte fermée contenant ledit agent aqueux. L'agent apte à piéger le formaldéhyde est ainsi appliqué de manière indépendante de la résine contenant le formaldéhyde puisque celui-ci est appliqué sur le produit d'isolation et non en mélange avec ladite résine lors de sa préparation.

US 6 362 275 B1 décrit une résine aldéhyde à faible taux d'aldéhyde, et plus particulièrement une résine à faible taux de formaldéhyde libre. La dite résine est obtenue en faisant réagir un mélange contenant à la fois un aldéhyde, du phénol ou de l'urée et/ou de la mélamine et un acide aminé, en présence d'un catalyseur. La résine phénolique ainsi obtenue est constituée essentiellement de condensats phénol-aldéhyde-acide aminé.

US 5 707 537 A décrit une mousse isolante contenant une résine phénol-formaldéhyde et un additif qui réduit la quantité de formaldéhyde émis par la mousse. L'additif est un peptide ou une matière protéinée. L'additif est ajouté à la résine déjà constituée de condensats phénol-formaldéhyde et non lors de la préparation de ladite résine.

Dans WO 2008/043960 A1, il est décrit une résine phénolique à faible teneur en formaldéhyde libre, inférieure à 0,1 %, qui est constituée essentiellement de condensats phénol-formaldéhyde et phénol-formaldéhyde-amine. La résine de l'exemple est acide (pH = 5) et elle est stable pendant 8 jours à 14°C et 21 jours à 8°C (diluabilité à l'eau, à 20°C, supérieure à 1000 %).

Un tel pH est obtenu par l'emploi d'acide sulfamique qui est une matière première coûteuse. En outre, un pH aussi bas peut engendrer des problèmes de corrosion des installations industrielles, sauf si celles-ci sont entièrement dotées de matériels en inox.

La présente invention a pour but de proposer une résine phénolique qui ne fait pas intervenir de traitement par l'acide sulfamique, qui conserve une faible proportion de formaldéhyde libre et de phénol libre, et qui possède une excellente stabilité.

La résine phénolique conforme à l'invention est apte à être utilisée dans une composition d'encollage pulvérisable et génère peu d'émissions indésirables.

Un autre objet de l'invention est un procédé de fabrication de la résine qui n'utilise pas d'urée pour diminuer la teneur en formaldéhyde libre et ne comprend aucune étape de traitement par un acide, notamment l'acide sulfamique.

L'invention a aussi pour objet une composition d'encollage comprenant ladite résine, son utilisation pour encoller des fibres minérales en vue de former des produits d'isolation thermique et/ou acoustique et les produits ainsi obtenus.

La résine liquide conforme à l'invention, destinée à être utilisée dans une composition d'encollage pour fibres minérales, contient essentiellement des condensats de phénol-formaldéhyde (P-F) et de phénol-formaldéhyde-glycine (P-F-G). La résine liquide présente un taux de formaldéhyde libre au plus égal à 0,5 % en poids total de liquide, de préférence au plus 0,3 % et avantageusement au plus 0,1 %.

Le taux de phénol libre de la résine est inférieur ou égal à 0,5 % en poids total de liquide, de préférence inférieur ou égal à 0,3 % et avantageusement inférieur ou égal à 0,1 %.

La résine présente une valeur de pH, mesurée à 20°C, qui varie de 4 à 11, de préférence 6,5 à 9,0, et avantageusement 7,5 à 8,3.

La résine présente une diluabilité à l'eau, mesurée à 20°C, au moins égale à 1000 %, de préférence au moins égale à 2000 %.

La résine est en outre stable thermiquement car elle est exempte de condensats urée-formaldéhyde (U-F) connus pour leur aptitude à se dégrader sous l'effet de la température. Les condensats P-F-G sont quant à eux stables dans les conditions précitées, notamment génèrent peu de formaldéhyde, en particulier lors du vieillissement du produit isolant final.

Selon l'invention, on fait suivre la réaction de condensation du phénol et du formaldéhyde par une réaction qui consiste à condenser la glycine avec le phénol et le formaldéhyde libres, d'une part, et les condensats P-F, d'autre part.

Pour obtenir la résine telle que définie ci-dessus, l'invention propose un procédé qui consiste à faire réagir du phénol et du formaldéhyde en présence d'un catalyseur basique, dans un rapport molaire formaldéhyde/phénol supérieur à 1, pour former des condensats P-F et à introduire ensuite dans le mélange réactionnel la glycine qui réagit avec le formaldéhyde libre, le phénol libre et les condensats P-F selon la réaction de Mannich.

De préférence, on fait réagir le phénol et le formaldéhyde dans un rapport molaire formaldéhyde/phénol qui varie de 2 à 4, avantageusement est inférieur ou égal à 3, et mieux encore qui varie de 2,50 à 2,65, jusqu'à un taux de conversion du phénol supérieur ou égal à 93 %. A ce stade de la condensation, la résine présente une diluabilité à l'eau supérieure à 1000 %.

Par « taux de conversion du phénol », on entend le pourcentage de phénol ayant participé à la réaction de condensation avec le formaldéhyde par rapport au phénol de départ. De préférence, le taux de conversion du phénol est supérieur ou égal à 95 %, et avantageusement supérieur ou égal à 97 %.

Conformément à l'invention, la glycine est introduite dans le milieu réactionnel de manière progressive afin d'éviter toute réaction intempestive avec le phénol et le formaldéhyde (réaction exothermique) et la température au moment de l'ajout de la glycine est maintenue constante pendant la durée de condensation de la glycine, tout en veillant à ce que la diluabilité à l'eau de la résine reste au moins égale à 1000 %.

L'introduction de la glycine est effectuée à une température qui peut varier de 60 à 75°C, de préférence de l'ordre de 60°C.

Le maintien à la température précitée permet notamment de faire réagir la glycine avec la quasi-totalité du formaldéhyde présent dans le milieu réactionnel et par conséquent d'abaisser le taux de formaldéhyde libre dans la résine finale jusqu'à une valeur au plus égale à 0,5 % du poids total de liquide, de préférence au plus 0,3 % et avantageusement au plus 0,1 %.

Le maintien à la température mentionnée précédemment permet en outre de réduire le taux de phénol libre dans la résine, en particulier lorsque celle-ci est obtenue avec un rapport molaire formaldéhyde/phénol inférieur à 3.

La préparation de la résine a lieu selon un cycle de température qui comprend trois phases : une phase de chauffage, une phase de maintien de la température et une phase de refroidissement.

Dans la première phase, on mélange du formaldéhyde et du phénol en présence d'un catalyseur basique et on chauffe progressivement ledit mélange à une température qui varie de 60 à 75°C, de préférence environ 70°C. Le rapport molaire formaldéhyde/phénol est supérieur à 1, de préférence varie de 2 à 4, avantageusement est inférieur ou égal à 3, et mieux encore varie de 2,50 à 2,65.

Le catalyseur peut être choisi parmi les catalyseurs connus de l'homme du métier, par exemple la triéthylamine, la chaux (CaO) et les hydroxydes de métaux alcalins ou alcalino-terreux, par exemple les hydroxydes de sodium, de potassium, de calcium ou de baryum. L'hydroxyde de sodium est préféré.

La quantité de catalyseur varie de 2 à 15 % en poids par rapport au poids de phénol de départ, de préférence de 5 à 9 %, et avantageusement de 6 à 8 %.

Dans la deuxième phase, la température du mélange réactionnel à la fin de première phase est maintenue dans les limites précitées jusqu'à l'obtention de condensats P-F. De préférence, la température est maintenue jusqu'à ce que le taux de conversion du phénol soit au moins égal à 93 %, ce qui permet de garantir une proportion élevée de condensats P-F. Comme déjà mentionné, le taux de conversion du phénol est de préférence au moins égal à 95 % et avantageusement au moins égal à 97 %.

Quand le taux de conversion du phénol souhaité est atteint, on introduit la glycine dans le mélange réactionnel afin qu'elle réagisse avec le formaldéhyde et le phénol résiduels et les condensats P-F pour former des condensats P-F-G.

L'addition de la glycine a lieu progressivement et peut par exemple être effectuée à raison de 0,5 à 20 % en poids par minute de la quantité totale de glycine, de préférence 1 à 10 % et avantageusement 2,8 à 4 %.

La quantité de glycine mise en œuvre représente 0,1 à 0,5 mole de glycine par mole de phénol de départ, de préférence 0,2 à 0,3 mole.

De préférence, l'ajout de la glycine s'effectue à une température qui varie de 60 à 65°C.

Après l'ajout de la glycine, la température est maintenue constante pendant encore 10 à 180 minutes, de préférence au moins 30 minutes et avantageusement 60 à 120 minutes, de manière à poursuivre la réaction de condensation de la glycine avec le formaldéhyde et le phénol résiduels, et les condensats P-F jusqu'à un stade plus avancé et réduire encore la quantité de formaldéhyde et de phénol libres, la diluabilité à l'eau de la résine, mesurée à 20°C, devant être maintenue au moins égale à 1000 %.

Dans la troisième phase, on refroidit le mélange réactionnel à la température de 20 à 25°C environ, de préférence progressivement sur une durée de l'ordre de 30 à 40 minutes.

Le pH de la résine liquide ainsi obtenue est proche de la neutralité, c'est-à-dire qu'il varie de 4 à 11, de préférence 6,5 à 9, et avantageusement 7,5 à 8,3 comme cela a déjà été mentionné. L'obtention d'un tel pH résulte de la présence du groupement carboxylique porté par les résidus de la glycine dans les condensats phénol-formaldéhyde-glycine. On évite ainsi l'étape de traitement de la résine avec un acide, en particulier l'acide sulfamique, pour ajuster le pH.

L'invention concerne aussi une composition d'encollage applicable sur des fibres minérales, notamment des fibres de verre ou de roches, ainsi que les produits isolants obtenus à partir de ces fibres encollées.

La composition d'encollage est une composition aqueuse qui comprend la résine phénolique selon la présente invention, au moins un composé renfermant au moins un groupe fonctionnel hydroxy ou amine et des additifs d'encollage.

Le composé précité joue le rôle d'agent de réticulation : il est apte à réagir avec les fonctions carboxyliques des résidus de glycine portées par les condensats phénol-formaldéhyde-glycine pour former des liaisons covalentes qui contribuent à la densification du réseau polymérique au niveau des points de jonction des fibres.

De préférence, le composé précité renferme au moins 2 groupes fonctionnels hydroxy et/ou amine.

Le composé précité préféré est choisi parmi les saccharides, avantageusement les oligosaccharides contenant jusqu'à 10 unités de monosaccharide, et mieux encore les monosaccharides, et les amines primaires ou secondaires. De préférence, on choisit le glucose, l'urée ou un mélange de glucose et d'urée.

La quantité de composé renfermant au moins un groupe fonctionnel hydroxy ou amine dans la composition d'encollage varie de 1 à 40 parts en poids pour 100 parts en poids de résine et dudit composé, calculé sur la base du poids sec, de préférence 10 à 30 parts.

Etant donné que la résine conforme à l'invention présente un taux de formaldéhyde libre très faible, inférieur à 0,5 %, il n'est pas nécessaire d'ajouter de l'urée en tant qu'agent permettant de piéger le formaldéhyde dans la composition d'encollage, sauf à vouloir contrôler le temps de gel de la composition d'encollage afin d'éviter d'éventuels problèmes de prégélification.

La quantité d'urée est au plus égale à 25 parts en poids pour 100 parts en poids de résine, de polyol et d'urée, calculé sur la base du poids sec, et de préférence n'excède pas 10 parts.

D'une manière générale, la composition d'encollage conforme à l'invention comprend en outre les additifs suivants, pour 100 parts en poids de résine, de polyol et d'urée, le cas échéant, calculé sur la base du poids sec :
- 0 à 5 parts de sulfate d'ammonium et/ou de sulfamate d'ammonium, généralement moins de 3 parts,
- 0 à 2 parts de silane, en particulier un aminosilane,
- 0 à 20 parts d'huile, généralement 6 à 15 parts.

Le rôle des additifs est connu et brièvement rappelé : le sulfate d'ammonium et le sulfamate d'ammonium servent de catalyseurs de polycondensation (dans l'étuve à chaud) après la pulvérisation de la composition d'encollage sur les fibres ; le silane est un agent de couplage entre les fibres et la résine, et joue également le rôle d'agent anti-vieillissement ; les huiles sont des agents anti-poussières et hydrophobes.

De l'eau peut être ajoutée à la composition d'encollage afin d'ajuster les paramètres en fonction du mode d'application visé qui est préférentiellement la pulvérisation.

Les exemples qui suivent permettent d'illustrer l'invention sans toutefois la limiter.

Dans les exemples, on utilise les méthodes d'analyse suivantes :
- la quantité de phénol libre dans la résine est mesurée par chromatographie en phase gazeuse mettant en œuvre une colonne capillaire (phase stationnaire : Stabilwax® commercialisée par la société REZTK), un injecteur avec diviseur de flux (« injecteur split »), un détecteur à ionisation de flamme (FID) et un système d'acquisition des données (Chemstation commercialisé par Agilent),
- la quantité de formaldéhyde libre dans la résine est mesurée par colorimétrie à l'aide de solutions d'acétate d'ammonium et d'acétylacétone (méthode LCK 325, édition 94/07, Dr Lange ; spectrophotomètre CADAS 100).
- la reprise d'épaisseur est mesurée après mise en compression du produit d'isolation avec un taux de compression (défini comme étant le rapport de l'épaisseur nominale à l'épaisseur sous compression) égal à 8/1. La reprise d'épaisseur est le rapport de l'épaisseur mesurée à l'épaisseur nominale, exprimée en % ; elle permet d'évaluer la bonne tenue dimensionnelle du produit,
- la résistance en traction du produit d'isolation produits d'isolation est mesurée selon la norme ASTM C 686-71T sur un échantillon découpé par estampage. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en N) de l'échantillon et on calcule la résistance en traction par le rapport de la force de rupture F à la masse de l'échantillon, exprimée en N/g.

La résistance en traction est mesurée après la fabrication (RT fab.) et après un vieillissement accéléré dans un autoclave à une température de 105°C sous 100 % d'humidité relative pendant 15 minutes (RT15) ;
- les composés présents dans les émissions gazeuses générées pendant la fabrication du produit d'isolation sont évalués comme suit : les émissions sont collectées et introduites à la vitesse de 4 litres par minute dans 6 barboteurs en série contenant chacun 100 ml d'eau déminéralisée pendant 60 minutes. On rassemble l'eau des barboteurs et on mesure les teneurs en composés suivants (exprimées en mg/Nm³) :
   - ammoniaque par chromatographie liquide haute performance (colonne échangeuse de cations (référence IonPack® CS17 commercialisée par la société Dionex ; éluant : acide méthane sulfonique ; détecteur conductimétrique),
   - formaldéhyde libre dans les conditions déjà mentionnées pour la résine,
   - phénol libre par chromatographie en phase gazeuse utilisant une colonne remplie (phase stationnaire : Tenax®-GC commercialisée par la société Interchim) et un détecteur à ionisation de flamme (FID),
   - phénol total par colorimétrie à l'aide d'une solution de 4-nitroaniline (méthode LCK 35, édition 93/10, Dr Lange; spectrophotomètre CADAS 100),
   - composés organiques totaux (COT) dans les conditions de la norme FR EN 1484.

### EXEMPLE 1

Dans un réacteur de 2 litres surmonté d'un condenseur et équipé d'un système d'agitation, on introduit 318,5 g de phénol (pureté : 99 % ; 3,35 moles), 261,9 g de paraformaldéhyde (pureté : 96 % ; 8,37 moles) et 296,8 g d'eau et on chauffe le mélange à 45°C sous agitation. Le rapport molaire formaldéhyde/phénol est égal à 2,5.

On ajoute régulièrement en 30 minutes 47,4 g de soude en solution aqueuse à 50 % (soit 7 % en poids par rapport au phénol), puis on élève la température progressivement à 70°C en 30 minutes et on la maintient pendant 120 minutes (un taux de conversion du phénol au moins égal à 93 %).

Ensuite, on diminue la température à 60°C en 30 minutes et simultanément on introduit dans le mélange réactionnel, de manière régulière, 75 g de glycine (pureté : 98 % ; 0,98 mole). On maintient la température à 60°C pendant 90 minutes puis on refroidit le mélange jusqu'à 20°C environ en 40 minutes.

La résine liquide obtenue est limpide, possède un extrait sec égal à 55 %, un pH égal à 7,4 et une diluabilité à l'eau, à 20°C, supérieure à 2000 %.

La résine présente un taux de formaldéhyde libre inférieur à 0,1 % et un taux de phénol libre égal à 0,25 %, les taux étant exprimés en poids total de liquide.

La résine est stable pendant au moins 6 semaines à 20°C.

### EXEMPLE 2

Dans un réacteur de 2 litres surmonté d'un condenseur et équipé d'un système d'agitation, on introduit 282,3 g de phénol (pureté : 99,7 % ; 2,99 moles), 244,9 g de paraformaldéhyde (pureté : 96 % ; 7,83 moles) et 277,6 g d'eau et on chauffe le mélange à 45°C sous agitation. Le rapport molaire formaldéhyde/phénol est égal à 2,61.

On ajoute régulièrement en 30 minutes 39,5 g de soude en solution aqueuse à 50 % (soit 7 % en poids par rapport au phénol), puis on élève la température progressivement à 70°C en 30 minutes et on la maintient pendant 120 minutes (taux de conversion du phénol au moins égal à 93 %).

Ensuite, on diminue la température à 60°C en 30 minutes et simultanément on introduit dans le mélange réactionnel, de manière régulière, 66,52 g de glycine (pureté : 99 % ; 0,88 mole). On maintient la température à 60°C pendant 180 minutes puis on refroidit le mélange jusqu'à 20°C environ en 30 minutes.

La résine liquide obtenue est limpide, possède un extrait sec égal à 54,8 %, un pH égal à 7,4 et une diluabilité à l'eau, à 20°C, supérieure à 2000 %.

La résine présente un taux de formaldéhyde libre inférieur à 0,3 % et un taux de phénol libre égal à 0,04 %.

La résine conserve une diluabilité à l'eau supérieure à 2000 % pendant au moins 6 semaines de stockage à 20°C.

### EXEMPLE 3 (COMPARATIF)

On procède dans les conditions de l'exemple 2 modifié en ce que la glycine est remplacée par l'acide aspartique (117 g ; 0,88 mole).

La résine liquide obtenue est trouble et sédimente rapidement : il se forme un précipité blanc représentant environ 5 % du volume total de la résine et un surnageant jaune clair.

Le surnageant présente un pH égal à 4,1, une diluabilité à l'eau, à 20°C, égale à 300 %, un taux de formaldéhyde libre inférieur à 1,6 % et un taux de phénol libre égal à 0,64 %.

### EXEMPLE 4 (COMPARATIF)

Préparation d'une résine phénolique modifiée par une amine selon WO 2008/043960 A1.

Dans le réacteur de l'exemple 1, on introduit 378 g de phénol (4 moles) et 666,7 g de formaldéhyde en solution aqueuse à 45 % (10 moles) et on chauffe le mélange à 45°C sous agitation. Le rapport molaire formaldéhyde/phénol est égal à 2,5.

On ajoute régulièrement en 30 minutes 52,9 g de soude en solution aqueuse à 50 % (soit 7 % en poids par rapport au phénol), puis on élève la température progressivement à 70°C en 30 minutes et on la maintient pendant 80 minutes de manière à atteindre un taux de conversion du phénol égal à 93 %.

Ensuite, on diminue la température à 60°C en 30 minutes et simultanément on introduit dans le mélange réactionnel, de manière régulière, 68,4 g de monoéthanolamine (1,11 mole). On maintient la température à 60°C pendant 15 minutes puis on refroidit le mélange jusqu'à 25°C environ en 30 minutes. On ajoute de l'acide sulfamique en solution à 15 %, en 60 minutes, jusqu'à ce que le pH soit égal à 4,7, puis 200 g d'urée.

La résine ainsi obtenue présente un extrait sec égal à 58 %, une diluabilité à l'eau, à 20°C, supérieure à 2000 %, un taux de formaldéhyde libre inférieur à 0,1 % et un taux de phénol libre égal à 0,3 %, ces deux derniers taux étant exprimés en poids total de liquide.

### EXEMPLE 5 (COMPARATIF)

Dans le réacteur de l'exemple 1, on introduit 283,5 g de phénol (3 moles) et 640 g de formaldéhyde en solution aqueuse à 45 % (9,6 moles) et on chauffe le mélange à 45°C sous agitation. Le rapport molaire formaldéhyde/phénol est égal à 3,2.

On ajoute régulièrement en 30 minutes 34 g de soude en solution aqueuse à 50 % (soit 6 % en poids par rapport au phénol), puis on élève la température progressivement à 70°C en 30 minutes et on la maintient pendant 105 minutes.

On amène la température du mélange à 35°C en 35 minutes et on ajoute de l'acide sulfamique jusqu'à ce que le pH soit égal à 7,3.

La résine présente un extrait sec égal à 48,5 %, une diluabilité à l'eau, à 20°C, supérieure à 2000 %, un taux de formaldéhyde égal à 5,3 % et un taux de phénol libre égal à 0,41 %, ces deux derniers taux étant exprimés en poids total de liquide. La résine présente une diluabilité à l'eau, à 20°C, supérieure à 1000 % après 30 jours de stockage à 14°C.

### EXEMPLES 6 A 9

Obtention de produits d'isolation acoustiques et/ou thermiques.

### a) Préparation de compositions d'encollage

Les résines des exemples 1, 2, 4 et 5 sont utilisées pour préparer les compositions d'encollage suivantes (en parts pondérales (extrait sec)) :
- Exemple 6 (selon l'invention)
   - 80 parts de la résine de l'exemple 1
   - 10 parts d'urée
   - 10 parts de glucose
   - 9,5 parts d'huile (Mulrex®)
   - 1 part de sulfate d'ammonium
   - 1 part de silane (gamma-aminopropyltriéthoxysilane)
- Exemple 7 (selon l'invention)
   - 80 parts de la résine de l'exemple 2
   - 10 parts d'urée
   - 10 parts de glucose
   - 9,5 parts d'huile (Mulrex®)
   - 1 part de sulfate d'ammonium
   - 1 part de silane (gamma-aminopropyltriéthoxysilane)
- Exemple 8 (comparatif)
   - 100 parts en poids de la résine de l'exemple 4
   - 9,5 parts d'huile (Mulrex®)
   - 3 parts de sulfate d'ammonium
   - 0,5 part de silane (gamma-aminopropyltriéthoxysilane)
- Exemple 9 (comparatif)
   - 70 parts en poids de la résine de l'exemple 5
   - 30 parts en poids d'urée
   - 9,5 parts d'huile (Mulrex®)
   - 3 parts de sulfate d'ammonium
   - 0,5 part de silane (gamma-aminopropyltriéthoxysilane)
   - 6 parts d'une solution d'ammoniaque à 20% en poids.

### b) fabrication des produits d'isolation

On fabrique de la laine de verre dans une installation pilote opérant par centrifugation interne et on pulvérise la composition d'encollage selon l'exemple 6, 7 8 ou 9 sur les fibres de verre à la sortie du dispositif de fibrage à raison de 4,7 % en poids sec de la composition d'encollage par rapport au poids des fibres. Les fibres encollées sont collectées sur un convoyeur à bande où elles forment un matelas de laine de verre qui est ensuite soumis à un traitement thermique dans une étuve de manière à obtenir une température minimale de 200°C au cœur du produit.

Le produit isolant final a une épaisseur nominale de 80 mm et une densité nominale de 10,6 kg/m³.

Le tableau 1 rassemble les valeurs de la reprise en épaisseur et de la résistance en traction des exemples 6 et 8.

**Tableau 1**

| | Exemple 6 | Exemple 8 (comparatif) |
|---|---|---|
| Reprise en épaisseur (%) | | |
| - 1 heure | 150 | 145 |
| - 24 heures | 140 | 140 |
| - 12 jours | 140 | 140 |
| - 30 jours | 135 | 130 |

| Résistance en traction (N/g) | | |
|---|---|---|
| - RT fab. | 2,9 | 2,2 |
| - RT15 | 2,7 | 2,1 |

Le produit de l'exemple 6 selon l'invention présente des valeurs de reprise en épaisseur comparables à celles de la résine de l'exemple 8 et une meilleure résistance en traction.

Le tableau 2 suivant rassemble les mesures des émissions générées pendant la fabrication des produits des exemples 7 à 9, dans la chambre de réception des fibres (« forming ») et dans l'étuve.

**Tableau 2**

| | Exemple 7 | Exemple 8 (comparatif) | Exemple 9 (comparatif) |
|---|---|---|---|
| Ammoniac (mg/Nm³) | 5,8 | 19,3 | 31,6 |
| Formaldehyde (mg/Nm³) | 1,1 | 0,3 | 4,4 |
| Phénol libre (mg/Nm³) | 0,05 | 3,1 | 3,1 |
| Phénol total (mg/Nm³) | 1,5 | 7,9 | 10,2 |
| COT (mg/Nm³) | 9,3 | 15,6 | 24,2 |

Les quantités des différents produits émis figurant dans ce tableau ne reflètent pas les émissions réelles sur une ligne de fabrication industrielle de produits isolants, mais elles doivent être lues afin de comparer les comportements des compositions d'encollage testées.

Le produit isolant selon l'invention émet moins d'ammoniac, de phénol libre ou total et de composés organiques totaux (COT) que ceux des exemples comparatifs 8 et 9. La quantité de formaldéhyde émis est plus faible qu'avec une résine phénol-formaldéhyde conventionnelle (exemple 9) mais reste cependant légèrement plus élevée qu'avec la résine à très bas taux de formaldéhyde selon l'exemple 8.

## Revendications

1. Résine liquide, destinée à entrer dans la constitution d'une composition d'encollage pour fibres minérales, **caractérisée en ce qu'**elle est constituée essentiellement de condensats de phénol-formaldéhyde (P-F) et de condensats phénol-formaldéhyde-glycine (P-F-G).

2. Résine selon la revendication 1, **caractérisée en ce qu'**elle présente un taux de formaldéhyde libre au plus égal à 0,5 % en poids total de liquide, de préférence au plus égal à 0,3 % et avantageusement au plus égal à 0,1 %.

3. Résine selon la revendication 1 ou 2, **caractérisée en ce qu'**elle présente un taux de phénol libre inférieur ou égal à 0,5 % en poids total de liquide, de préférence inférieur ou égal à 0,3 % et avantageusement inférieur ou égal à 0,1 %.

4. Résine selon l'une des revendications 1 à 3, **caractérisée en ce qu'**elle présente un pH, mesuré à 20°C, qui varie de 4 à 11, de préférence 6,5 à 9,0, et avantageusement 7,5 à 8,3.

5. Résine selon l'une des revendications 1 à 4, **caractérisée en ce qu'**elle présente une diluabilité à l'eau, à 20°C, supérieure ou égale à 2000 %.

6. Procédé de préparation d'une résine selon l'une des revendications 1 à 5, qui comprend les étapes consistant à faire réagir du phénol et du formaldéhyde en présence d'un catalyseur basique, dans un rapport molaire formaldéhyde/phénol supérieur à 1, pour former des condensats P-F, et à introduire ensuite dans le mélange réactionnel la glycine qui réagit avec le formaldéhyde libre, le phénol libre et les condensats P-F selon la réaction de Mannich.

7. Procédé selon la revendication 6, **caractérisé en ce que** l'on fait réagir le formaldéhyde et le phénol dans un rapport molaire formaldéhyde/phénol qui varie de 2 à 4, de préférence est inférieur à 3, et avantageusement varie de 2,50 à 2,65.

8. Procédé selon la revendication 7, **caractérisé en ce que** la réaction du phénol et du formaldéhyde est poursuivie jusqu'à ce que le taux de conversion du phénol soit supérieur ou égal à 93 %, de préférence supérieur ou égal à 95 %, et avantageusement supérieur ou égal à 97 %.

9. Procédé selon l'une des revendications 6 à 8, **caractérisé en ce que** la réaction entre le phénol et le formaldéhyde est effectuée à une température qui varie de 60 à 75°C, de préférence environ 70°C

10. Procédé selon l'une des revendications 6 à 9, **caractérisé en ce que** la glycine est introduite dans le milieu réactionnel de manière progressive et la température au moment de l'ajout de la glycine est maintenue constante pendant la durée de condensation de la glycine, la diluabilité à l'eau de la résine devant rester au moins égale à 1000 %.

11. Procédé selon l'une des revendications 6 à 10, **caractérisé en ce que** l'ajout de la glycine est effectué à raison de 0,5 à 20 % en poids par minute de la quantité totale de glycine, de préférence 1 à 10 % et avantageusement 2 ,8 à 4 %.

12. Procédé selon l'une des revendications 6 à 11, **caractérisé en ce que** la quantité de glycine représente 0,1 à 0,5 mole de glycine par mole de phénol de départ, de préférence 0,2 à 0,3 mole.

13. Procédé selon l'une des revendications 6 à 12, caractérisé en ce, après l'introduction de la glycine, on maintient la température constante pendant 10 à 180 minutes, de préférence au moins 30 minutes et avantageusement 60 à 120 minutes.

14. Composition d'encollage aqueuse pour fibres minérales, comprenant une résine phénolique selon l'une des revendications 1 à 5, au moins un composé renfermant au moins un groupe fonctionnel hydroxy ou amine et des additifs d'encollage.

15. Composition selon la revendication 14, **caractérisée en ce que** ledit composé renferme au moins 2 groupes fonctionnels hydroxy et/ou amine.

16. Composition selon la revendication 14 ou 15, **caractérisée** en ce ledit composé est choisi parmi les saccharides et les amines primaires ou secondaires.

17. Composition selon la revendication 16, **caractérisée en ce que** ledit composé est le glucose, l'urée ou un mélange de glucose et d'urée.

18. Composition selon l'une des revendications 14 à 17, **caractérisée en ce que** la quantité dudit composé varie de 1 à 40 parts en poids pour 100 parts en poids de résine et dudit composé, calculé sur la base du poids sec.

19. Produit d'isolation, notamment thermique et/ou acoustique, comprenant des fibres minérales encollées à l'aide de la composition d'encollage selon l'une des revendications 14 à 18.

## Patentansprüche

1. Flüssiges Harz, das Teil einer Schlichtungszusammensetzung für Mineralfasern sein soll, **dadurch gekennzeichnet, dass** es im Wesentlichen aus Phenol-Formaldehyd (PF)-Kondensaten und Phenol-Formaldehyd-Glycin (PFG)-Kondensaten besteht.

2. Harz nach Anspruch 1, **dadurch gekennzeichnet, dass** es einen Gehalt an freiem Formaldehyd von höchstens gleich 0,5 Gew.-% des Gesamtgewichts von Flüssigkeit, vorzugsweise höchstens gleich 0,3 % und vorteilhafterweise höchstens gleich 0,1 % aufweist.

3. Harz nach Anspruch 1 oder 2, **dadurch gekennzeichnet, dass** es einen Gehalt an freiem Phenol von weniger als oder gleich 0,5 Gew.-% des Gesamtgewichts von Flüssigkeit, vorzugsweise weniger als oder gleich 0,3 %, und vorteilhafterweise weniger als oder gleich 0,1 % aufweist.

4. Harz nach einem der Ansprüche 1 bis 3, **dadurch gekennzeichnet, dass** es einen pH-Wert, gemessen bei 20 °C, aufweist, der von 4 bis 11, vorzugsweise 6,5 bis 9,0, und vorteilhafterweise 7,5 bis 8,3, variiert.

5. Harz nach einem der Ansprüche 1 bis 4, **dadurch gekennzeichnet, dass** es eine Verdünnungsfähigkeit mit Wasser bei 20 °C aufweist, die größer oder gleich 2000 % ist.

6. Verfahren zur Herstellung eines Harzes nach einem der Ansprüche 1 bis 5, umfassend die Schritte, die darin bestehen, Phenol und Formaldehyd in Gegenwart eines basischen Katalysators in einem Formaldehyd/Phenol-Molverhältnis von mehr als 1 reagieren zu lassen, um PF-Kondensate zu bilden, und dann Glycin in das Reaktionsgemisch einzuführen, das mit freiem Formaldehyd, freiem Phenol und PF-Kondensaten gemäß der Mannich-Reaktion reagiert.

7. Verfahren nach Anspruch 6, **dadurch gekennzeichnet, dass** das Formaldehyd und das Phenol in einem Formaldehyd/Phenol-Molverhältnis zur Reaktion veranlasst werden, das von 2 bis 4 variiert, vorzugsweise weniger als 3 beträgt und vorteilhafterweise von 2,50 bis 2,65 variiert.

8. Verfahren nach Anspruch 7, **dadurch gekennzeichnet, dass** die Reaktion von Phenol und Formaldehyd fortgesetzt wird, bis die Umwandlungsrate des Phenols größer oder gleich 93 %, vorzugsweise größer oder gleich 95 % und vorteilhafterweise größer oder gleich 97 % ist.

9. Verfahren nach einem der Ansprüche 6 bis 8, **dadurch gekennzeichnet, dass** die Reaktion zwischen Phenol und Formaldehyd bei einer Temperatur durchgeführt wird, die von 60 bis 75 °C, vorzugsweise etwa 70 °C variiert

10. Verfahren nach einem der Ansprüche 6 bis 9, **dadurch gekennzeichnet, dass** Glycin progressiv in das Reaktionsmedium eingeführt wird und die Temperatur zum Zeitpunkt der Zugabe des Glycins während der Kondensationszeit des Glycins konstant gehalten wird, wobei die Wasserverdünnbarkeit des Harzes mindestens gleich 1000 % bleiben muss.

11. Verfahren nach einem der Ansprüche 6 bis 10, **dadurch gekennzeichnet, dass** die Zugabe von Glycin in einer Menge von 0,5 bis 20 Gew.-% pro Minute der Gesamtmenge an Glycin, vorzugsweise 1 bis 10 % und vorteilhafterweise 2,8 bis 4 % durchgeführt wird.

12. Verfahren nach einem der Ansprüche 6 bis 11, **dadurch gekennzeichnet, dass** die Menge an Glycin 0,1 bis 0,5 Mol Glycin pro Mol Ausgangsphenol, vorzugsweise 0,2 bis 0,3 Mol darstellt.

13. Verfahren nach einem der Ansprüche 6 bis 12, **dadurch gekennzeichnet, dass** nach der Einführung des Glycins die Temperatur 10 bis 180 Minuten, vorzugsweise mindestens 30 Minuten und vorteilhafterweise 60 bis 120 Minuten konstant gehalten wird.

14. Wässrige Schlichtungszusammensetzung für Mineralfasern, umfassend ein Phenolharz nach einem der Ansprüche 1 bis 5, mindestens eine Verbindung, die mindestens eine funktionelle Hydroxy- oder Aminogruppe und Schlichtungsadditive enthält.

15. Zusammensetzung nach Anspruch 14, **dadurch gekennzeichnet, dass** die genannte Verbindung mindestens 2 funktionelle Hydroxy- und/oder Aminogruppen enthält.

16. Zusammensetzung nach Anspruch 14 oder 15, **dadurch gekennzeichnet, dass** die Verbindung aus Sacchariden und primären oder sekundären Aminen ausgewählt ist.

17. Zusammensetzung nach Anspruch 16, **dadurch gekennzeichnet, dass** die Verbindung Glucose, Harnstoff oder eine Mischung aus Glucose und Harnstoff ist.

18. Zusammensetzung nach einem der Ansprüche 14 bis 17, **dadurch gekennzeichnet, dass** die Menge der Verbindung von 1 bis 40 Gewichtsanteilen auf 100 Gewichtsanteile des Harzes und der Verbindung, berechnet auf der Basis des Trockengewichts, beträgt.

19. Insbesondere wärme- und/oder schalldämmendes Produkt, umfassend Mineralfasern, verleimt mithilfe der Schlichtungszusammensetzung nach einem der Ansprüche 14 bis 18.

## Claims

1. A liquid resin intended to participate in the makeup of a sizing composition for mineral fibers, **characterized in that** it is essentially composed of phenol-formaldehyde (P-F) condensates and phenol-formaldehyde-glycine (P-F-G) condensates.

2. The resin as claimed in claim 1, **characterized in that** it exhibits a level of free formaldehyde at most equal to 0.5%, preferably at most equal to 0.3% and advantageously at most equal to 0.1%, as total weight of liquid.

3. The resin as claimed in claim 1 or 2, **characterized in that** it exhibits a level of free phenol of less than or equal to 0.5%, preferably of less than or equal to 0.3% and advantageously of less than or equal to 0.1%, as total weight of liquid.

4. The resin as claimed in one of claims 1 to 3, **characterized in that** it exhibits a pH, measured at 20°C, which varies from 4 to 11, preferably from 6.5 to 9.0 and advantageously from 7.5 to 8.3.

5. The resin as claimed in one of claims 1 to 4, **characterized in that** it exhibits a dilutability in water, at 20°C, of greater than or equal to 2000%.

6. A process for the preparation of a resin as claimed in one of claims 1 to 5, which comprises the stages consisting in reacting phenol and formaldehyde in the presence of a basic catalyst, in a formaldehyde/phenol molar ratio of greater than 1, in order to form P-F condensates, and in subsequently introducing glycine into the reaction mixture, which glycine reacts with the free formaldehyde, the free phenol and the P-F condensates according to the Mannich reaction.

7. The process as claimed in claim 6, **characterized in that** the formaldehyde and the phenol are reacted in a formaldehyde/phenol molar ratio which varies from 2 to 4, is preferably less than 3 and advantageously varies from 2.50 to 2.65.

8. The process as claimed in claim 7, **characterized in that** the reaction of the phenol and formaldehyde is continued until the degree of conversion of the phenol is greater than or equal to 93%, preferably greater than or equal to 95% and advantageously greater than or equal to 97%.

9. The process as claimed in one of claims 6 to 8, **characterized in that** the reaction between the phenol and the formaldehyde is carried out at a temperature which varies from 60 to 75°C, preferably approximately 70°C.

10. The process as claimed in one of claims 6 to 9, **characterized in that** the glycine is gradually introduced into the reaction medium and the temperature at the time of the addition of the glycine is kept constant throughout the duration of condensation of the glycine, the dilutability in water of the resin having to remain at least equal to 1000%.

11. The process as claimed in one of claims 6 to 10, **characterized in that** the addition of the glycine is carried out at the rate of 0.5 to 20%, preferably of 1 to 10% and advantageously of 2.8 to 4% by weight per minute of the total amount of glycine.

12. The process as claimed in one of claims 6 to 11, **characterized in that** the amount of glycine represents from 0.1 to 0.5 mol, preferably from 0.2 to 0.3 mol, of glycine per mole of starting phenol.

13. The process as claimed in one of claims 6 to 12, **characterized in that**, after the introduction of the glycine, the temperature is kept constant for 10 to 180 minutes, preferably at least 30 minutes and advantageously for 60 to 120 minutes.

14. An aqueous sizing composition for mineral fibers, comprising a phenolic resin as claimed in one of claims 1 to 5, at least one compound including at least one hydroxyl or amine functional group and sizing additives.

15. The composition as claimed in claim 14, **characterized in that** said compound includes at least 2 hydroxyl and/or amine functional groups.

16. The composition as claimed in claim 14 or 15, **characterized in that** said compound is chosen from saccharides and primary or secondary amines.

17. The composition as claimed in claim 16, **characterized in that** said compound is glucose, urea or a mixture of glucose and urea.

18. The composition as claimed in one of claims 14 to 17, **characterized in that** the amount of said compound varies from 1 to 40 parts by weight per 100 parts by weight of resin and said compound, calculated on the basis of the dry weight.

19. An insulating product, in particular a thermal and/or acoustic insulating product, comprising mineral fibers sized using the sizing composition as claimed in one of claims 14 to 18.
